# EUROPEAN PATENT APPLICATION

(11) **EP 4 851 124 A1**
(43) Date of publication of application: **09.12.2026**
(21) Application number: 25216198.9
(22) Date of filing: 17.11.2025
(51) Int. Cl.: C04B 35/575, C01B 32/956

(54) **SILICON CARBDE SINTERED BODY AND HEAT DISSIPATION MEMBER**

(30) Priority: 03.06.2025 JP 2025092624; 12.09.2025 JP 2025152246
(71) Applicant: Maruwa Co. Ltd., Aichi 488-0044 (JP)
(72) Inventor: NISHII, Hiroto, Toki-city, Gifu, 5095312 (JP); TAKAHASHI, Mitsutaka, Toki-city, Gifu, 5095312 (JP); YABE, Takeshi, Toki-city, Gifu, 5095312 (JP)
(74) Representative: dompatent

(57) **Abstract**

[Problem] To provide a silicon carbide sintered body with high thermal conductivity.

[Solution] A silicon carbide sintered body according to an embodiment of the present invention contains a sintered silicon carbide particle and a scandium compound, wherein the silicon carbide sintered body has a thermal conductivity of 275 W/m·K or more, and a free carbon content in the silicon carbide sintered body is 0.1 wt.% or less. In the silicon carbide sintered body, a volume resistivity may be 5.0 Ω·cm or more. In the silicon carbide sintered body, a main crystal phase of the silicon carbide particle may consist of a 4H crystal structure. According to an embodiment of the present invention, a silicon carbide sintered body with high thermal conductivity and high resistivity is provided.

## Description

### TECHNICAL FIELD

The present invention relates to a silicon carbide sintered body and a heat dissipation member.

### BACKGROUND ART

Silicon carbide is widely used in various devices as a material for a heat-resistant member such as a heater or power semiconductor member. Recently, the development of a silicon carbide sintered body with high thermal conductivity has been actively promoted. Non-Patent Literature 1 discloses a silicon carbide sintered body having higher thermal conductivity using a Be sintering additive. Patent Literature 1 discloses a silicon carbide sintered body containing yttrium oxide and having improved characteristics of conductivity, thermal conductivity, and plasma resistance in a well-balanced manner.

### CITATION LIST

### PATENT LITERATURE

Patent Literature 1: Patent No. 6787207

### NON PATENT LITERATURE

Non Patent Literature 1: Takeda Yukio, Nakamura Kosuke, Maeda Kunihiro, Matsushita Yasuo, Journal of the Ceramic Society of Japan 95 [9] 860-863 (1987)

### SUMMARY OF INVENTION

### TECHNICAL PROBLEM

On the other hand, thermal conductivity of a conventional silicon carbide sintered body is only 270 W/m·K at the highest. Since BeO used in the silicon carbide sintered body of Non-Patent Literature 1 is toxic, it has problems in manufacturing and practical use. In Patent-Literature 1, a volume resistivity a conventional silicon carbide sintered body is only 1.5 Ω·cm, and cannot be used as a high-resistance (high-pressure resistance) member.

In view of such problems, an object of the present invention is to provide a silicon carbide sintered body with high thermal conductivity.

### SOLUTION TO PROBLEM

According to an embodiment of the present invention, a silicon carbide sintered body containing a sintered silicon carbide particle and a scandium compound is provided, wherein the silicon carbide sintered body has a thermal conductivity of 275 W/m·K or more, and a free carbon content in the silicon carbide sintered body is 0.1 wt.% or less.

In the silicon carbide sintered body, volume resistivity may be 5.0 Ω·cm or more.

In the silicon carbide sintered body, a main crystal phase of the silicon carbide particle may consist of a 4H crystal structure.

According to an embodiment of the present invention, a silicon carbide sintered body containing sintered a silicon carbide particle and a scandium compound is provided, wherein a nitrogen content in the silicon carbide sintered body is 300 wt. ppm or less, and a free carbon content in the silicon carbide sintered body is 0.1 wt.% or less.

In the silicon carbide sintered body, an arithmetic average value of the major axis diameter of the silicon carbide particle may be 10 µm or more in an arbitrary region of a polished surface obtained by polishing a surface of the silicon carbide sintered body.

In the silicon carbide sintered body, an area-weighted average value of the major axis diameter of the silicon carbide particle may be 30 µm or more in an arbitrary region of the polished surface obtained by polishing the surface of the silicon carbide sintered body.

In the silicon carbide sintered body, a maximum value of the major axis diameter of the silicon carbide particle may be 70 µm or more in an arbitrary region of the polished surface obtained by polishing the surface of the silicon carbide sintered body.

In the silicon carbide sintered body, an arithmetic average value of a particle area of the silicon carbide particle may be 50 µm² or more in an arbitrary region of the polished surface obtained by polishing the surface of the silicon carbide sintered body.

In the silicon carbide sintered body, an area-weighted average value of the particle area of the silicon carbide particle may be 300 µm² or more in an arbitrary region of the polished surface obtained by polishing the surface of the silicon carbide sintered body.

In the silicon carbide sintered body, a maximum particle area of the silicon carbide particle may be 1000 µm² or more in an arbitrary region of the polished surface obtained by polishing the surface of the silicon carbide sintered body.

In the silicon carbide sintered body, a nitrogen content may be 300 wt. ppm or less.

According to an embodiment of the present invention, a heat dissipation member using a silicon carbide sintered body is provided.

### ADVANTAGEIOUS EFFECTS OF INVENTION

According to an embodiment of the present invention, it is possible to provide a silicon carbide sintered body having higher thermal conductivity than a conventional sintered body.

### BRIEF DESCRIPTION OF DRAWINGS

FIG. 1 is a scanning electron microscope image of a polishing surface of a silicon carbide sintered body of Example 2.
FIG. 2 is a scanning electron microscope image of a polishing surface of a silicon carbide sintered body of Comparative Example 1.
FIG. 3 is an EBSD image of the silicon carbide sintered body of Example 2.
FIG. 4 is an image obtained by a crystal structure analysis of the EBSD image (FIG. 3) of the silicon carbide sintered body of Example 2.
FIG. 5 is an image showing an evaluation of a major axis diameter of the silicon carbide particle in an EBSD image of the silicon carbide sintered body of Example 2.
FIG. 6 is a graph showing a relationship between an arithmetic average value of the major axis diameter of the silicon carbide particle and thermal conductivity of the silicon carbide sintered body in Examples 1 to 22 and Comparative Examples 1 to 6.
FIG. 7 is a graph showing a relationship between an arithmetic average value of the area of the silicon carbide particle and a thermal conductivity of the silicon carbide sintered body in Examples 1 to 22 and Comparative Examples 1 to 6.

### DESCRIPTION OF EMBODIMENTS

The following embodiments are examples of embodiments of the present invention, and the present invention is not limited to these embodiments.

### [1. Configuration of Silicon Carbide Sintered Body]

A configuration of a silicon carbide sintered body according to an embodiment of the present invention will be described below.

A silicon carbide sintered body according to an embodiment of the present invention includes a sintered silicon carbide particle and a scandium compound. The scandium compound is produced by an addition of a sintering additive and is present in the sintered body as particles or grain boundary phases. In addition to scandium and oxygen, nitrogen, silicon, carbon (free carbon), or other trace metal elements may be detected in such particles and grain boundary phases. The scandium compound incorporates oxygen, nitrogen, and other trace metal elements, thereby reducing their dissolution into the silicon carbide particle and cleaning the grain boundaries between the silicon carbide particle. It is well known that oxygen and nitrogen dissolved in silicon carbide form various lattice defects by substituting carbon at the C site of silicon carbide, resulting in a decrease in thermal conductivity due to the scattering of phonons.

The content of the scandium compound in the silicon carbide sintered body is desirably 0.01 to 5.0 wt.%, preferably 0.1 to 3.0 wt.% in terms of the oxide of scandium. In the case where the content is less than 0.01 wt.%, the effects are insufficient, and a high thermal conductivity is not achieved. Further, in the case where the content is more than 5.0 wt.%, in addition to suppressing the grain growth of the silicon carbide particle, the presence of the scandium compound particle having low thermal conductivity reduces the thermal conductivity of the silicon carbide sintered body.

In addition, the nitrogen amount (also referred to as nitrogen content or nitrogen concentration) contained in the silicon carbide sintered body according to an embodiment of the present invention is desirably 300 wt. ppm (or mass ppm) or less, preferably 150 wt. ppm or less, more preferably 100 wt. ppm or less, and still more preferably 50 wt. ppm or less. Since nitrogen contributes as a donor, it is possible to reduce the electrical conductivity of the silicon carbide sintered body (silicon carbide particle) and increase volume resistivity by reducing the nitrogen content. In addition, although the mechanism is not known at present, the inclusion of the scandium compound, the low nitrogen content, and the low free carbon content causes the silicon carbide particle to preferably form an α-type 4H crystal structure (4H-SiC) rather than a β-type 3C crystal structure (3C-SiC), resulting in large grain growth. Therefore, the silicon carbide sintered body according to an embodiment of the present invention is characterized in that it is composed of large grown silicon carbide particles having a main crystal phase of a 4H crystal structure.

In addition, an amount of free carbon (also referred to as the free carbon content or free carbon concentration) contained in the silicon carbide sintered body according to an embodiment of the present invention is desirably 0.10 wt.% or less, preferably 0.05 wt.% or less, and more preferably 0.01 wt.% or less. When the free carbon is present in an amount of 0.10 wt.% or more, in addition to inhibiting the grain growth of the silicon carbide particle, the free carbon particle precipitated at the grain boundaries and the like have strong anisotropy in thermal conductivity, which causes a decrease in the thermal conductivity of the sintered body.

The size of the silicon carbide particle is calculated in a partial region of the polishing surface of the silicon carbide sintered body. In an embodiment of the present invention, in an arbitrary region of the polishing surface (e.g., at least one 400 µm × 400 µm region), the arithmetic average value of the major axis diameter of the silicon carbide particle is 10 µm or more, the area-weighted average value of the major axis diameter of the silicon carbide particle is 30 µm or more, and the maximal value of the major axis diameter of the silicon carbide particle is 70 µm or more. Similarly, in the same region, the arithmetic average value of the area of the silicon carbide particle is 50 µm² or more, the area-weighted average value of the area of the silicon carbide particle is 300 µm² or more, and the maximum value of the area of the silicon carbide particle is 1000 µm² or more.

A thermal conductivity of the silicon carbide sintered body having the above-described configuration is 275 W/m·K or more, and a volume resistivity of the silicon carbide sintered body is 5.0 Ω·cm or more.

### [2. Method for Manufacturing Silicon Carbide Sintered Body]

A method for manufacturing a silicon carbide sintered body according to an embodiment of the present invention will be described below. In addition, the method for manufacturing the silicon carbide sintered body is not particularly limited, and other well-known methods may be used.

### (1) Manufacture of Silicon Carbide Powder

First, silicon carbide powder used for manufacturing a silicon carbide sintered body is manufactured. In an embodiment of the present invention, from a viewpoint of achieving high thermal conductivity, it is desirable that the silicon carbide powder used for the silicon carbide sintered body has a low metal impurity content and is substantially free from metal impurities. In addition, from a viewpoint of high-resistance and high thermal conductivity, an amount of nitrogen contained in the silicon carbide powder is preferably 500 wt. ppm or less, more preferably 300 wt. ppm or less. Therefore, this can promote the formation of the α-type 4H crystal structure (4H-SiC) rather than the β-type 3C crystal structure (3C-SiC) as the crystal phase (crystal structure) of silicon carbide. In addition, the particle size of the silicon carbide powder is preferably about 0.1 to 20 µm, more preferably about 0.3 to 5 µm in terms of average particle size (D50).

### (1-1) Synthesis and Drying Process

A predetermined amount of a raw material containing a silicon source, a raw material containing a carbon source, and a raw material containing a catalyst is added to form a mixture. Stirring and heating are performed to make the mixture homogeneous, and then the mixture is reacted and dried to produce a solid.

The silicon source may be liquid or solid, but preferably includes a liquid silicon source. The liquid silicon source is not particularly limited, but examples thereof include alkoxysilane compounds, ethyl silicate, and alkoxysilane oligomers. The solid silicon source is not particularly limited, but examples thereof include silicon oxides such as silicon monoxide (SiO) and silicon dioxide (SiO₂), and metallic Si.

A resin material can be used as the carbon source. In this example, a phenolic resin is used. The phenolic resin is preferably a high-purity resin having an impurity element content of 20 wt. ppm or less (more preferably 5 wt. ppm or less, still more preferably 0.5 wt. ppm or less). The term "impurity element" means an element belonging to Groups 1 to 16 of the Periodic Table of Elements as defined in the 1989 Revised IUPAC Nomenclature of Inorganic Chemistry, having an atomic number of 3 or higher, except for those having atomic numbers 6 to 8 and 14. The phenolic resin may be in either a liquid or a solid state, but when it is in a solid state, it is preferably used after being dissolved in an appropriate solvent. **In** addition, since a method for manufacturing the silicon carbide without using a nitrogen compound is easy to apply, a novolac-type phenolic resin may be used. The novolac-type phenolic resin can reduce the amount of nitrogen compared with a resol-type phenolic resin.

The catalyst is not particularly limited, but examples thereof include maleic acid, p-toluenesulfonic acid, acetic acid, acrylic acid, oxalic acid, malonic acid, and succinic acid. Further, in the present embodiment, pure water may be added as a reactant. In the case where ethyl silicate or alkoxysilane is used as the silicon source, adding pure water promotes hydrolysis and polymerization, and the reaction progresses.

### (1-2) Carbonization Process

Next, the solid is heated to 500 to 1000°C under a non-oxidizing atmosphere such as argon. As a result, a carbide is produced.

### (1-3) Firing Process

Next, the carbide is heated to 1700 to 2000°C in a non-oxidizing atmosphere. As a result, a silicon carbide coarse particle is produced.

### (1-4) Pulverizing Process

Next, the silicon carbide coarse particle is pulverized. As a result, the silicon carbide powder is produced. The pulverization method is not particularly limited, but in this example, a pulverization method using a dry jet mill can be applied. In the case where the silicon carbide powder is pulverized by the dry jet mill, the nitrogen content in the silicon carbide powder is preferably 500 wt. ppm or less, more preferably 300 wt. ppm or less. In this case, the particle size of the pulverized silicon carbide powder is preferably about 0.1 to 20 µm, more preferably about 0.3 to 5 µm in terms of average particle size (D50).

### (2) Granulation Process

Next, the silicon carbide powder, a sintering additive, and a dispersion medium are mixed to produce a liquid mixture (slurry). The produced slurry is granulated.

Silicon carbide is a material that is difficult to sinter, and in particular, the conventional raw material contains a high amount of impurities, such as oxygen, making the use of a sintering additive, typified by carbon, essential. On the other hand, it is known that a portion of such a sintering additive remains in the sintered body after sintering, which causes a deterioration in the thermal and mechanical properties of the sintered body. Therefore, the less the amount of sintering additive used, the better, and it is ideal not to use a sintering additive.

In the case where carbon is used as the sintering additive, a carbon-based material such as a resol-type phenolic resin or a novolac-type phenolic resin can be used as the carbon source, and the use of the novolac-type phenolic resin is more preferable because it can suppress an increase in the amount of nitrogen. In addition, the sintering additive of the carbon-based material is not necessarily required to reduce the free carbon content in the silicon carbide sintered body.

A scandium compound, more specifically, scandium oxide is used as the sintering additive of the metal compound. The amount of the scandium compound is preferably 0.01 to 5.0 wt.%, more preferably 0.1 to 3.0 wt.%. By using the metal compound as the sintering additive, the temperature at the time of sintering can be lowered as compared with the case of using only the carbon-based sintering additive.

**In** an embodiment of the present invention, the granulation method is not particularly limited, but a spray granulation method (spray drying), a fluidized bed granulation method, a rolling granulation method, or the like can be used. The size of the silicon carbide particle after granulation is preferably about 0.5 to 150 µm, more preferably about 30 to 150 µm in terms of average particle size (D50). In this case, by granulating by the spray granulation method (spray drying), it is possible to produce a silicon carbide particle having good handling properties while uniformly dispersing the sintering additive.

### (3) Sintering Process

Next, the granulated silicon carbide particle are sintered. The sintering method is not particularly limited, but a hot press method, a reaction sintering method, an atmospheric pressure sintering method, or the like can be used. For example, the use of the hot press method is more preferable because the density of the silicon carbide sintered body after sintering can be improved. The maximum temperature of the hot press method is not particularly limited, but is preferably 1900 to 2400°C, more preferably 2000 to 2300°C. The pressure of the hot press is not particularly limited, but may be 20 to 50 MPa.

### [3. Usage]

The silicon carbide sintered body according to an embodiment of the present invention is not particularly limited, but may be used as a heat dissipation member, a susceptor (wafer support member), a susceptor cover (a member that protects the wafer support member), a heater, a ring, an electrode, a sputtering target, or the like for semiconductor manufacturing device members.

### [Modifications]

The present invention is not limited to the above-described embodiments, and includes various other modifications. For example, the above-described embodiments have been described in detail for the purpose of explaining the present disclosure easily, and are not necessarily limited to those having all the described configurations. In addition, a part of the configuration of an embodiment may be replaced with the configuration of another embodiment, and the configuration of another embodiment may be added to the configuration of an embodiment. Further, it is possible to add, delete, or replace a part of the configuration of each embodiment with another configuration. Some modifications will be described below.

In an embodiment of the present invention, although an example in which the silicon carbide sintered body contains the silicon carbide particle and the scandium compound has been described, the present invention is not limited to this. For example, in addition to the sintered silicon carbide particle and the scandium compound, the silicon carbide sintered body may contain a rare earth metal compound, such as an yttrium compound, an ytterbium compound, and a lanthanum compound, and a transition metal compound, such as a vanadium compound, a chromium compound, and a tantalum compound. In this case, the total content of the metal compound containing the scandium compound is desirably 0.01 to 5.0 wt.%, preferably 0.1 to 3.0 wt.%.

Further, in an embodiment of the present invention, the description "the silicon carbide sintered body contains the silicon carbide particle and the scandium compound" includes the description of containing the silicon carbide particle and the scandium oxide. This is in consideration that the composition of scandium oxide mixed during sintering may slightly change due to volatilization or the like. In this case, the scandium compound may include scandium nitride, scandium oxynitride, or scandium carbide in addition to scandium oxide. Similarly, for the rare earth metal compound, the yttrium compound may include yttrium oxide, yttrium nitride, yttrium oxynitride, or yttrium carbide, the ytterbium compound may include ytterbium oxide, ytterbium nitride, ytterbium oxynitride, or ytterbium carbide, the lanthanum compound may include lanthanum oxide, lanthanum nitride, lanthanum oxynitride, or lanthanum carbide, and other rare earth metals or transition metal compounds may include oxides, nitrides, oxynitrides, or carbides.

### [EXAMPLES]

Next, examples embodying the present invention will be described in comparison with comparative examples. In addition, materials, quantities, and conditions of each part of the examples are merely examples, and can be changed as appropriate without departing from the gist of the invention.

### 1. Evaluation Method

In the present example, an evaluation method for the silicon carbide sintered body produced under each condition will be described below.

### (1) Volume Resistivity Evaluation

The volume resistivity was evaluated using a resistivity meter (Loresta GP MCP-T610, manufactured by Nittoseiko Analytech Co., Ltd.).

### (2) Thermal Conductivity Evaluation

The thermal conductivity was evaluated using a thermal conductivity measuring device (LFA467 HyperFlash, manufactured by NETZSCH Corporation).

### (3) Composition Analysis of Sintered Body

The composition of the sintered body was analyzed using a wavelength dispersive X-ray fluorescence analyzer (ZSX Primus IV, manufactured by Rigaku Holdings Corporation). Quantification of each component in the sintered body was performed in EZ scan mode, and the amount of contained scandium compound was expressed as a weight ratio to silicon carbide by converting the metal component into an oxide (Sc₂O₃).

### (4) Nitrogen Content Evaluation

The nitrogen content was evaluated using a nitrogen analyzer (EMGA-Expert, manufactured by HORIBA, Ltd.).

### (5) Crystal Structure Evaluation

The crystal structure was evaluated using an X-ray diffractometer (Ultima IV, manufactured by Rigaku Holdings Corporation). In addition, each polytype was quantified by measuring the intensity of each diffraction line of X-ray diffraction and using regression analysis. Further, the crystal structure of the micro region was evaluated by an electron backscatter diffraction method (EBSD) using a scanning electron microscope (JSM-IT700HR, manufactured by JEOL Ltd.).

### (6) Particle size and Particle Area Evaluation

The particle size of the produced silicon carbide powder was evaluated using a particle size distribution analyzer (LS-13-320, manufactured by Beckman Coulter, Inc.). The particle size and particle area of the silicon carbide sintered body were evaluated using the scanning electron microscope. The particle size and particle area of the silicon carbide sintered body were evaluated using the electron backscatter diffraction method (EBSD), and in a region where the total number of particles is 50 or more, for example, in Examples 1, 2, 4 to 14, 16, 17, 20, and 21 and Comparative Example 3, the major axis diameter (arithmetic average value, area-weighted average value, maximum value) and area (arithmetic average value, area-weighted average value, maximum value) of the crystal particle are calculated in an area of 400 µm × 400 µm, in Examples 3, 15, 18, 19, and 22, the major axis diameter (arithmetic average value, area-weighted average value, maximum value) and area (arithmetic average value, area-weighted average value, maximum value) of the crystal particle are calculated in an area of 1000 µm × 1000 µm, and in Comparative Examples 1, 2, 4, 5, and 6, the major axis diameter (arithmetic average value, area-weighted average value, maximum value) and area (arithmetic average value, area-weighted average value, maximum value) of the crystal particle are calculated in an area of 60 µm × 60 µm.

### (7) Free Carbon Content

The free carbon content was measured using a carbon analyzer (EMIA-810W, manufactured by HORIBA, Ltd.).

### 2. Production of Silicon Carbide Sintered Body

The conditions for producing the silicon carbide sintered body under each condition will be described below with reference to Table 1.

**[Table 1]**

| Example | Auxiliary agent | | | | | | |
|---|---|---|---|---|---|---|---|
| | Carbon-based | | Sc₂O₃ | RE₂O₃ | | Other metal compounds | |
| | Type | Addition amount (wt %) | Addition amount (wt %) | Type | Addition amount (wt %) | Type | Addition amount (wt %) |
| Example 1 | Phenoric resin | 2.6 | 0.250 | Y₂O₃ | 0.250 | - | - |
| Example 2 | Phenoric resin | 2.6 | 0.375 | Y₂O₃ | 0.125 | - | - |
| Example 3 | Phenoric resin | 2.6 | 0.375 | Y₂O₃ | 0.125 | - | - |
| Example 4 | Phenoric resin | 2.6 | 0.230 | Y₂O₃ | 0.850 | - | - |
| Example 5 | Phenoric resin | 2.6 | 0.225 | Y₂O₃ | 0.075 | - | - |
| Example 6 | Phenoric resin | 2.6 | 0.525 | Y₂O₃ | 0.175 | - | - |
| Example 7 | Phenoric resin | 2.6 | 0.750 | Y₂O₃ | 0.250 | - | - |
| Example 8 | Phenoric resin | 1.0 | 0.375 | Y₂O₃ | 0.125 | - | - |
| Example 9 | None | - | 0.375 | Y₂O₃ | 0.125 | - | - |
| Example 10 | None | - | 0.525 | Y₂O₃ | 0.175 | - | - |
| Example 11 | None | - | 0.750 | Y₂O₃ | 0.250 | - | - |
| Example 12 | Phenoric resin | 2.6 | 0.375 | Yb₂O₃ | 0.125 | - | - |
| Example 13 | Phenoric resin | 2.6 | 0.375 | La₂O₃ | 0.125 | - | - |
| Example 14 | Phenoric resin | 2.6 | 0.500 | - | - | - | - |
| Example 15 | None | - | 0.375 | Y₂O₃ | 0.125 | - | - |
| Example 16 | None | - | 0.150 | Y₂O₃ | 0.050 | - | - |
| Example 17 | None | - | 0.100 | Y₂O₃ | 0.300 | - | - |
| Example 18 | None | - | 0.300 | Y₂O₃ | 0.100 | - | - |
| Example 19 | None | - | 0.300 | - | - | - | - |
| Example 20 | None | - | 1.000 | - | - | TaC | 0.100 |
| Example 21 | None | - | 3.000 | - | - | - | - |
| Example 22 | None | - | 0.375 | Y₂O₃ | 0.125 | VC | 0.050 |
| Comparative Example 1 | Phenoric resin | 9.5 | - | - | - | - | - |
| Comparative Example 2 | Phenoric resin | 9.5 | - | - | - | - | - |
| Comparative Example 3 | Phenoric resin | 2.6 | - | Y₂O₃ | 0.500 | - | - |
| Comparative Example 4 | Phenoric resin | 2.6 | 0.375 | Y₂O₃ | 0.125 | - | - |
| Comparative Example 5 | Phenoric resin | 2.6 | 0.375 | Y₂O₃ | 0.125 | - | - |
| Comparative Example 6 | Phenoric resin | 9.5 | 0.375 | Y₂O₃ | 0.100 | - | - |

### [Example 1]

A method for producing the silicon carbide sintered body of Example 1 is described below.

### (1) Production of Silicon Carbide Powder

### (1-1) Synthesis and Drying Process

A liquid ethyl silicate oligomer (product name: Ethyl Silicate 40, SiO₂ content: 40 wt.%, manufactured by COLCOAT CO., LTD.) was used as the raw silicon source. A solid novolac phenolic resin (product name: PR-56431, manufactured by Sumitomo Bakelite Co., Ltd.) was used as the raw carbon source. A liquid maleic acid aqueous solution (obtained by hydrolyzing and dissolving maleic anhydride manufactured by NIPPON SHOKUBAI CO., LTD. with pure water) was used as a catalyst. 24 wt.% of ethanol and 16 wt.% of novolac phenolic resin were put in a container and stirred, the novolac phenolic resin was dissolved in ethanol, and then 51 wt.% of ethyl silicate 40, 8 wt.% of maleic acid aqueous solution, and 1 wt.% of pure water were added and mixed to form a viscous mixture. The mixture was gradually heated from room temperature to 200°C, reacted and dried to obtain a lumpy solid.

### (1-2) Carbonization Process

Next, the solid was heated at 900°C for 2 hours in an argon atmosphere to obtain a lumpy carbide.

### (1-3) Firing Process

Next, the carbide was heated to 1900°C in an argon atmosphere and held at that temperature for 4 hours to obtain a silicon carbide coarse particle having a particle size of about several tens of µm.

### (1-4) Pulverizing Process

Next, the silicon carbide coarse particle was pulverized by a dry jet mill. This produced silicon carbide powder having a nitrogen content of 34 wt. ppm and an average particle size (D50) of 0.84 µm.

### (2) Granulation Process

Next, 19.90 g of the above-described silicon carbide powder, 0.050 g (0.25 wt.%) of scandium oxide (Sc₂O₃), and 0.050 g (0.25 wt.%) of yttrium oxide (Y₂O₃) were added to the container to make a mixed powder, and then 0.525 g (2.6 wt.%) of phenolic resin and 14 g of ethanol as a dispersion medium were added and mixed to obtain a liquid mixture (slurry). Next, the slurry was stirred and dried, and then passed through a sieve with 200 µm openings to obtain granulated powder.

### (3) Sintering Process

Next, the obtained granulated powder was put in a graphite mold and sandwiched between graphite punches, pressurized at a 40 MPa pressure using a hot press device, the temperature was increased to 1600°C under vacuum conditions, further heated to 2200°C in an argon atmosphere and held at that temperature for 4 hours (hot press), thereby obtaining a silicon carbide sintered body.

### [Example 2]

In Example 2, a silicon carbide sintered body was obtained in the same manner as in Example 1, except that the blending ratio of scandium oxide and yttrium oxide was changed (a mixture was prepared so that the blending amount of silicon carbide powder was 19.90 g and the blending amount of scandium oxide was 0.075 g (0.375 wt.%), and the blending amount of yttrium oxide was 0.025 g (0.125 wt.%)).

### [Example 3]

In Example 3, a silicon carbide sintered body was obtained in the same manner as in Example 2, except that silicon carbide powder having a nitrogen content of 31 wt. ppm and an average particle size (D50) of 2.3 µm was used.

### [Example 4]

In Example 4, a silicon carbide sintered body was obtained in the same manner as in Example 1, except that the blending ratio of scandium oxide and yttrium oxide was changed (a mixture was prepared so that the blending amount of scandium oxide was 0.23 wt.% and the blending amount of yttrium oxide was 0.85 wt.%).

### [Example 5]

In Example 5, a silicon carbide sintered body was obtained in the same manner as in Example 1, except that the blending ratio of scandium oxide and yttrium oxide was changed (a mixture was prepared so that the blending amount of scandium oxide was 0.225 wt.% and the blending amount of yttrium oxide was 0.075 wt.%).

### [Example 6]

In Example 6, a silicon carbide sintered body was obtained in the same manner as in Example 1, except that the blending ratio of scandium oxide and yttrium oxide was changed (a mixture was prepared so that the blending amount of scandium oxide was 0.525 wt.% and the blending amount of yttrium oxide was 0.175 wt.%).

### [Example 7]

In Example 7, a silicon carbide sintered body was obtained in the same manner as in Example 1, except that the blending ratio of scandium oxide and yttrium oxide was changed (a mixture was prepared so that the blending amount of scandium oxide was 0.75 wt.% and the blending amount of yttrium oxide was 0.25 wt.%).

### [Example 8]

In Example 8, a silicon carbide sintered body was obtained in the same manner as in Example 1, except that the blending ratio of scandium oxide, yttrium oxide, and phenolic resin was changed (a mixture was prepared so that the blending amount of scandium oxide was 0.375 wt.%, the blending amount of yttrium oxide was 0.125 wt.%, and the blending amount of phenolic resin was 1.0 wt.%).

### [Example 9]

In Example 9, a silicon carbide sintered body was obtained in the same manner as in Example 1, except that the blending ratio of scandium oxide and yttrium oxide was changed (a mixture was prepared so that the blending amount of scandium oxide was 0.375 wt.%, the blending amount of yttrium oxide was 0.125 wt.%) and no phenolic resin was contained.

### [Example 10]

In Example 10, a silicon carbide sintered body was obtained in the same manner as in Example 1, except that the blending ratio of scandium oxide and yttrium oxide was changed (a mixture was prepared so that the blending amount of scandium oxide was 0.525 wt.% and the blending amount of yttrium oxide was 0.175 wt.%) and no phenolic resin was contained.

### [Example 11]

In Example 11, a silicon carbide sintered body was obtained in the same manner as in Example 1, except that the blending ratio of scandium oxide and yttrium oxide was changed (a mixture was prepared so that the blending amount of scandium oxide was 0.75 wt.% and the blending amount of yttrium oxide was 0.25 wt.%) and no phenolic resin was contained.

### [Example 12]

In Example 12, a silicon carbide sintered body was obtained in the same manner as in Example 1, except that the mixture was prepared so that the blending amount of scandium oxide was 0.375 wt.%, and the blending amount of ytterbium oxide (Yb₂O₃) was 0.125 wt.%.

### [Example 13]

In Example 13, a silicon carbide sintered body was obtained in the same manner as in Example 1, except that a mixture was prepared so that the blending amount of scandium oxide was 0.375 wt.%, and the blending amount of lanthanum oxide (La₂O₃) was 0.125 wt.%.

### [Example 14]

In Example 14, a silicon carbide sintered body was obtained in the same manner as in Example 1, except that a mixture was prepared so that the blending amount of scandium oxide was 0.5 wt.%, and no other metal oxides were contained.

### [Example 15]

In Example 15, a silicon carbide sintered body was obtained in the same manner as in Example 3, except that no phenolic resin was contained.

### [Example 16]

In Example 16, a silicon carbide sintered body was obtained in the same manner as in Example 15, except that the blending ratio of scandium oxide and yttrium oxide was changed (a mixture was prepared so that the blending amount of scandium oxide was 0.15 wt.% and the blending amount of yttrium oxide was 0.05 wt.%).

### [Example 17]

In Example 17, a silicon carbide sintered body was obtained in the same manner as in Example 15, except that the blending ratio of scandium oxide and yttrium oxide was changed (a mixture was prepared so that the blending amount of scandium oxide was 0.10 wt.% and the blending amount of yttrium oxide was 0.30 wt.%).

### [Example 18]

In Example 18, a silicon carbide sintered body was obtained in the same manner as in Example 15, except that the blending ratio of scandium oxide and yttrium oxide was changed (a mixture was prepared so that the blending amount of scandium oxide was 0.30 wt.% and the blending amount of yttrium oxide was 0.10 wt.%).

### [Example 19]

In Example 19, a silicon carbide sintered body was obtained in the same manner as in Example 15, except that a mixture was prepared so that the blending amount of scandium oxide was 0.30 wt.%, and no other metal oxides were contained.

### [Example 20]

In Example 20, a silicon carbide sintered body was obtained in the same manner as in Example 15, except that silicon carbide powder prepared in advance and having a nitrogen content of 320 wt. ppm was used, and a mixture was prepared so that the blending amount of scandium oxide was 1.0 wt.%, and 0.10 wt.% of tantalum carbide was contained.

### [Example 21]

In Example 21, a silicon carbide sintered body was obtained in the same manner as in Example 15, except that a mixture was prepared so that the blending amount of scandium oxide was 3.0 wt.%, and no other metal oxides were contained.

### [Example 22]

In Example 22, a silicon carbide sintered body was obtained in the same manner as in Example 15, except that 0.05 wt.% of vanadium carbide was contained as the other metal compound.

### [Comparative Example 1]

In Comparative Example 1, a silicon carbide sintered body was obtained in the same manner as in Example 1, except that silicon carbide powder prepared in advance and having a nitrogen content of 1100 wt. ppm was used, no scandium oxide and yttrium oxide were contained, the phenolic resin was prepared to have the blending amount of 9.5 wt.%, and the maximum temperature of sintering was set to 2300°C.

### [Comparative Example 2]

In Comparative Example 2, a silicon carbide sintered body was obtained in the same manner as in Example 1, except that no scandium oxide and yttrium oxide were contained, the phenolic resin was prepared to have the blending amount of 9.5 wt.%, and the maximum temperature of sintering was set to 2300°C.

### [Comparative Example 3]

In Comparative Example 3, a silicon carbide sintered body was obtained in the same manner as in Example 1, except that a mixture was prepared so that the blending amount of yttrium oxide was 0.5 wt.%, and no other metal oxides were contained.

### [Comparative Example 4]

In Comparative Example 4, a silicon carbide sintered body was obtained in the same manner as in Example 2, except that silicon carbide powder prepared in advance and having a nitrogen content of 430 wt. ppm was used.

### [Comparative Example 5]

In Comparative Example 5, a silicon carbide sintered body was obtained in the same manner as in Example 2, except that silicon carbide powder prepared in advance and having a nitrogen content of 1100 wt. ppm was used.

### [Comparative Example 6]

In Comparative Example 6, a silicon carbide sintered body was obtained in the same manner as in Example 1, except that the blending ratio of scandium oxide, yttrium oxide, and phenolic resin was changed (a mixture was prepared so that the blending amount of scandium oxide was 0.375 wt.%, the blending amount of yttrium oxide was 0.10 wt.%, and the blending amount of phenolic resin was 9.5 wt.%).

### 3. Evaluation Results

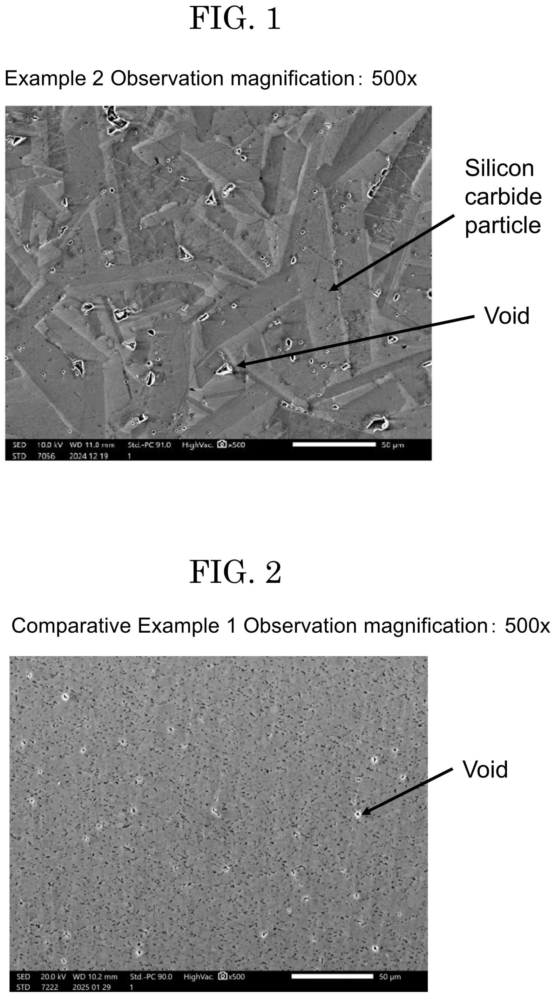

Evaluation results obtained under each condition will be described with reference to Table 2 and FIG. 1 to FIG. 7.

**[Table 2]**

| Example | Volume resistivity (Ω·cm) | Main crystal phase (%) | | Thermal conductivity (W/m·K) | Sc₂O₃ content (wt %) | Nitrogen content (wt ppm) | Free C (wt %) | Major axis diameter of silicon carbide particle (µm) | | | Area of silicon carbide particle (µm²) | | |
|---|---|---|---|---|---|---|---|---|---|---|---|---|---|
| | | | | | | | | Arithmetic average | Area-weighted average | Maximum | Arithmetic average | Area-weighted average | Maximum |
| Example 1 | 1.8 x10² | 4H | 49.2 | 277 | 0.40 | 78 | 0.04 | 22 | 58 | 139 | 135 | 813 | 2625 |
| Example 2 | 6.7 x10² | 4H | 71.6 | 301 | 0.31 | 95 | 0.04 | 33 | 74 | 135 | 444 | 1939 | 6817 |
| Example 3 | 1.3 x10⁴ | 4H | 100.0 | 330 | 0.19 | 23 | 0.02 | 103 | 361 | 950 | 5287 | 61441 | 242864 |
| Example 4 | 4.1 x10¹ | 4H | 48.9 | 278 | 0.20 | 99 | 0.05 | 19 | 59 | 144 | 149 | 1225 | 5590 |
| Example 5 | 1.8 x10¹ | 4H | 64.5 | 283 | 0.31 | 91 | 0.09 | 16 | 38 | 106 | 87 | 352 | 1408 |
| Example 6 | 3.3 x10² | 4H | 69.0 | 294 | 0.58 | 102 | 0.02 | 25 | 68 | 119 | 260 | 1580 | 4697 |
| Example 7 | 1.1 x10² | 4H | 69.7 | 291 | 1.16 | 99 | 0.02 | 27 | 62 | 150 | 291 | 1248 | 5138 |
| Example 8 | 2.3 x10⁴ | 4H | 80.7 | 307 | 0.29 | 53 | 0.03 | 20 | 54 | 114 | 158 | 957 | 3060 |
| Example 9 | 2.3 x10⁴ | 4H | 94.3 | 315 | 0.38 | 34 | <0.01 | 24 | 66 | 161 | 422 | 1585 | 5538 |
| Example 10 | 2.2 x10³ | 4H | 82.7 | 310 | 0.61 | 31 | <0.01 | 20 | 55 | 127 | 137 | 1007 | 4826 |
| Example 11 | 1.4 x10³ | 4H | 92.1 | 281 | 0.73 | 30 | <0.01 | 18 | 52 | 103 | 134 | 901 | 3025 |
| Example 12 | 2.2 x10¹ | 4H | 89.9 | 276 | 0.30 | 95 | 0.06 | 19 | 53 | 125 | 160 | 1085 | 5724 |
| Example 13 | 3.7 x10³ | 4H | 65.9 | 282 | 0.29 | 75 | 0.07 | 28 | 74 | 156 | 377 | 1881 | 5314 |
| Example 14 | 5.4 x10⁰ | 4H | 94.5 | 282 | 0.64 | 98 | 0.05 | 21 | 54 | 107 | 190 | 971 | 3822 |
| Example 15 | 77 x10⁶ | 4H | 100.0 | 366 | 0.17 | 23 | <0.01 | 97 | 226 | 582 | 4018 | 24198 | 117376 |
| Example 16 | 2.3 x10² | 4H | 90.0 | 311 | 0.09 | 24 | <0.01 | 26 | 64 | 120 | 163 | 847 | 3320 |
| Example 17 | 1.5 x10² | 4H | 75.5 | 276 | 0.04 | 35 | <0.01 | 20 | 53 | 135 | 141 | 720 | 3324 |
| Example 18 | 1.9 x10⁷ | 4H | 100.0 | 378 | 0.10 | 19 | <0.01 | 120 | 336 | 840 | 5682 | 46877 | 198820 |
| Example 19 | 5.9 x10⁶ | 4H | 100.0 | 383 | 0.21 | 22 | <0.01 | 118 | 347 | 899 | 5660 | 66678 | 263455 |
| Example 20 | 5.7 x10⁰ | 4H | 80.9 | 279 | 0.65 | 281 | <0.01 | 22 | 67 | 122 | 166 | 911 | 3574 |
| Example 21 | 7.1 x10² | 4H | 89.5 | 323 | 2.93 | 27 | <0.01 | 36 | 91 | 162 | 320 | 1480 | 5681 |
| Example 22 | 3.3 x10⁵ | 4H | 96.7 | 357 | 0.31 | 27 | 0.02 | 101 | 264 | 487 | 5011 | 30457 | 127785 |
| Comparative Example 1 | 2.0 x10⁻² | 3C | 80.0 | 214 | - | 680 | 1.10 | 1.9 | 3.0 | 7.2 | 1.6 | 4.0 | 20 |
| Comparative Example 2 | 1.9 x10⁰ | 3C | 60.5 | 210 | - | 34 | 1.15 | 2.4 | 4.4 | 19 | 2.2 | 8.8 | 80 |
| Comparative Example 3 | 7.5 x10⁰ | 6H | 52.5 | 226 | - | 95 | 0.04 | 4.3 | 13 | 51 | 7.4 | 66 | 333 |
| Comparative Example 4 | 6.7 x10² | 4H | 61.7 | 249 | 0.32 | 418 | 0.06 | 2.8 | 7.8 | 20 | 3.3 | 23 | 129 |
| Comparative Example 5 | 1.0 x10⁻¹ | 3C | 70.7 | 233 | 0.35 | 860 | 0.07 | 3.9 | 8.6 | 8.7 | 4.9 | 22 | 223 |
| Comparative Example 6 | 4.0 x10⁰ | 4H | 50.1 | 211 | 0.30 | 66 | 1.26 | 2.9 | 7.9 | 9.5 | 5.4 | 20 | 198 |

### (1) Scandium Content

According to Table 2, the amount of the scandium compound contained in the silicon carbide sintered bodies in Comparative Examples 1 to 6 was 0 to 0.35 wt.% in terms of oxide (Sc₂O₃), whereas the amount of the scandium compound contained in the silicon carbide sintered bodies in Examples 1 to 22 was 0.04 to 2.93 wt.% in terms of oxide (Sc₂O₃).

### (2) Nitrogen Content

According to Table 2, the nitrogen content of the silicon carbide sintered bodies in Comparative Examples 1 to 6 was 34 to 860 wt. ppm, whereas the nitrogen content of the silicon carbide sintered bodies in Examples 1 to 22 was 19 to 281 wt. ppm.

### (3) Free Carbon Content

According to Table 2, the free carbon content of the silicon carbide sintered bodies in Comparative Examples 1 to 6 was 0.04 to 1.26 wt.%, whereas the free carbon content of the silicon carbide sintered bodies in Examples 1 to 22 was less than 0.01 to 0.09 wt.%.

### (4) Crystal Structure

FIG. 1 is a Scanning Electron Microscope (SEM) image of a polished surface of the silicon carbide sintered body of Example 2. FIG. 2 is a SEM image of a polished surface of the silicon carbide sintered body of Comparative Example 1. As shown in FIG. 1, in the silicon carbide sintered body of Example 2, it was confirmed that crystal particle of silicon carbide had grown large. In this case, it was confirmed that the boundaries of the crystal particle (grain boundaries) were in a very clean state in which almost no impurities other than silicon carbide were detected, and the void and the auxiliary agent phase containing scandium were concentrated at the triple point. On the other hand, as shown in FIG. 2, in the silicon carbide sintered body of Comparative Example 1, large crystal particle as in Example 2 were not confirmed. In addition, it was confirmed that the void in Comparative Example 1 was smaller than the void of Example 2 and was dispersed throughout the entire surface.

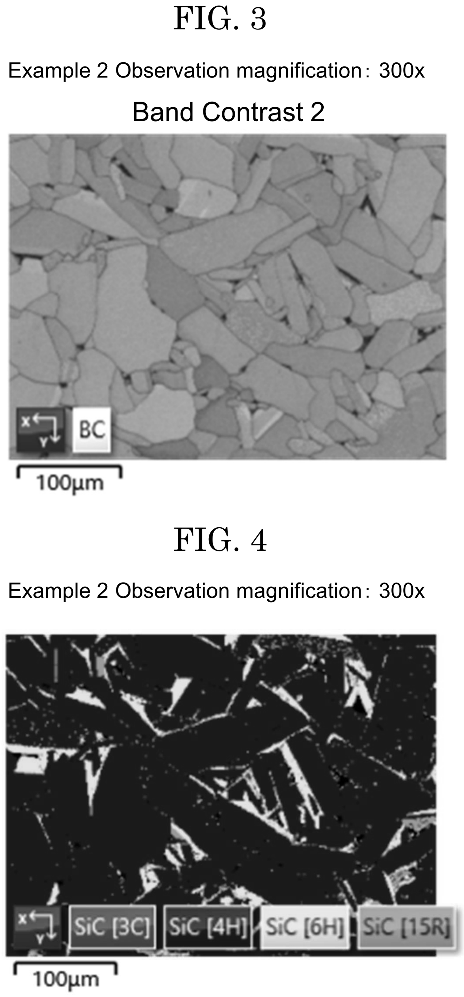

FIG. 3 is an EBSD image of the silicon carbide sintered body of Example 2. FIG. 4 is a result of a crystal structure analysis of the EBSD image of the silicon carbide sintered body of Example 2. As shown in FIG. 4, it was confirmed that a main crystal phase of the silicon carbide sintered body of Example 2 was composed of an α-type 4H crystal structure (4H-SiC). In addition, as shown in Table 2, according to the evaluation results by the X-ray diffraction (XRD) method, it was confirmed that the main crystal phase of silicon carbide in Comparative Examples 1 to 6 includes a crystal structure of any one of a cubic 3C crystal structure (3C-SiC), a hexagonal 6H crystal structure (6H-SiC), and a hexagonal 4H crystal structure (4H-SiC), whereas the main crystal structure of all the Examples 1 to 22 was the hexagonal 4H crystal structure (4H-SiC).

### (5) Particle size and Particle Area

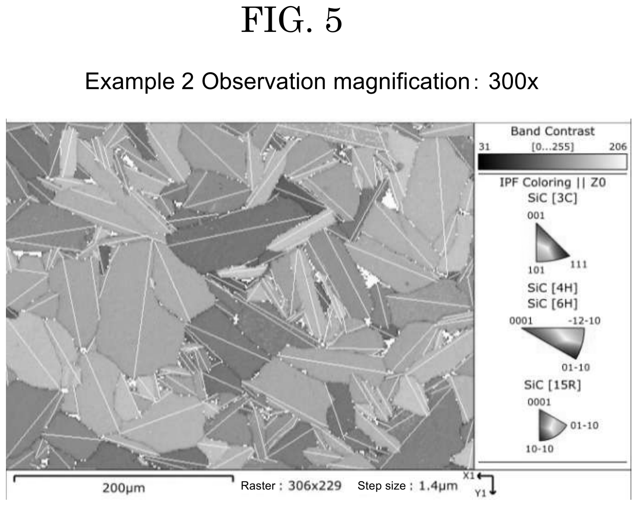

FIG. 5 is an image obtained by evaluating the major axis diameter of silicon carbide particle using the EBSD image of FIG. 3. According to Table 2, the arithmetic average value of the major axis diameter of the silicon carbide particle in the silicon carbide sintered bodies of Comparative Examples 1 to 6 was 1.9 to 4.3 µm, the area-weighted average value was 3.0 to 13 µm, and the maximum value was 7.2 to 51 µm, whereas the arithmetic average value of the major axis diameter of the silicon carbide particle in the silicon carbide sintered bodies of Examples 1 to 22 was 16 to 120 µm, the area-weighted average value was 38 to 361 µm, and the maximum value was 103 to 950 µm.

In addition, an area of the silicon carbide particle was evaluated using the EBSD image. According to Table 2, the arithmetic average value of the area of the silicon carbide particle in the silicon carbide sintered bodies of Comparative Examples 1 to 6 was 1.6 to 7.4 µm², the area-weighted average value was 4.0 to 66 µm², and the maximum value was 20 to 333 µm², whereas the arithmetic average value of the area of the silicon carbide particle in the silicon carbide sintered bodies of Examples 1 to 22 was 87 to 5682 µm², the area-weighted average value was 352 to 66678 µm², and the maximum value was 1408 to 263455 µm².

From the above results, it was confirmed that the silicon carbide particle in Examples 1 to 22 were larger than those in Comparative Examples 1 to 6.

### (6) Thermal Conductivity

According to Table 2, the thermal conductivity in Comparative Examples 1 to 6 was 210 to 249 W/m·K. On the other hand, the thermal conductivity in Examples 1 to 22 was 276 to 383 W/m·K, and it was confirmed that all of the Examples exhibited higher thermal conductivities than the Comparative Examples 1 to 6.

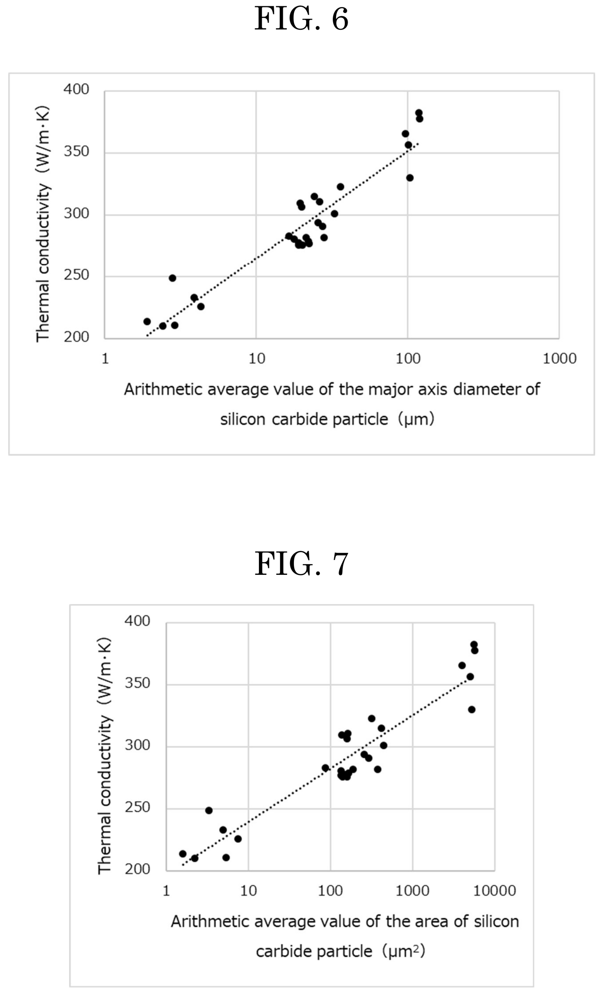

FIG. 6 is a graph showing a relationship between the arithmetic average value of the major axis diameter of the silicon carbide particle and the thermal conductivity of the silicon carbide sintered body in Examples 1 to 22 and Comparative Examples 1 to 6. FIG. 7 is a graph showing a relationship between the arithmetic average value of the areas of the silicon carbide particle and the thermal conductivity of the silicon carbide sintered body in Examples 1 to 22 and Comparative Examples 1 to 6. As shown in FIG. 6 and FIG. 7, it was confirmed that the thermal conductivity increased as the major axis diameter and the area of the silicon carbide particle increased. As in Examples 1 to 22, it is considered that the silicon carbide particle in the silicon carbide sintered body increased in size, thereby promoting thermal conductivity, and the thermal conductivity of the entire silicon carbide sintered body can be improved. Further, it was confirmed that when no scandium compound was contained as in Comparative Examples 1, 2, and 3, when the amount of nitrogen in the silicon carbide sintered body was high as in Comparative Examples 1, 4, and 5, or when the free carbon content increased as in Comparative Examples 1, 2, and 6, the silicon carbide particle did not grow, and the thermal conductivity of the silicon carbide sintered body tended to decrease.

### (7) Volume Resistivity

According to Table 2, the volume resistivity of the silicon carbide sintered bodies in Comparative Examples 1 to 6 was 2.0 × 10⁻² to 6.7 × 10² Ω·cm. On the other hand, the volume resistivity of the silicon carbide sintered bodies in Examples 1 to 22 was 5.4 × 10⁰ to 1.9 × 10⁷ Ω·cm.

From the above, it was confirmed that a silicon carbide sintered body with high thermal conductivity can be obtained by using an embodiment of the present invention. Further, it was also confirmed that a silicon carbide sintered body that achieves both high thermal conductivity and high volume resistivity can be obtained by using an embodiment of the present invention.

In addition, although the scandium source to be blended when producing the silicon carbide sintered body of the present invention has been described using scandium oxide in the Examples and Comparative Examples described above, the present invention is not limited to this, and scandium-containing compounds, such as metal scandium, scandium carbonate, scandium nitride, may be used.

## Claims

1. A silicon carbide sintered body comprising:
a sintered silicon carbide particle and a scandium compound, wherein
the silicon carbide sintered body has a thermal conductivity of 275 W/m·K or more, and
a free carbon content in the silicon carbide sintered body is 0.1 wt.% or less.

2. The silicon carbide sintered body according to Claim 1, wherein volume resistivity is 5.0 Ω·cm or more.

3. The silicon carbide sintered body according to Claim 1, wherein
a main crystal phase of the sintered silicon carbide particle consists of a 4H crystal structure.

4. A silicon carbide sintered body comprising:
a sintered silicon carbide particle and a scandium compound, wherein
a nitrogen content in the silicon carbide sintered body is 300 wt. ppm or less, and
a free carbon content in the silicon carbide sintered body is 0.1 wt.% or less.

5. The silicon carbide sintered body according to Claim 1, wherein
an arithmetic average value of a major axis diameter of the silicon carbide particle is 10 µm or more in an arbitrary region of a polished surface obtained by polishing a surface of the silicon carbide sintered body.

6. The silicon carbide sintered body according to Claim 1, wherein
an area-weighted average value of the major axis diameter of the silicon carbide particle is 30 µm or more in an arbitrary region of the polished surface obtained by polishing the surface of the silicon carbide sintered body.

7. The silicon carbide sintered body according to Claim 1, wherein
a maximum value of the major axis diameter of the silicon carbide particle is 70 µm or more in an arbitrary region of the polished surface obtained by polishing the surface of the silicon carbide sintered body.

8. The silicon carbide sintered body according to Claim 1, wherein
an arithmetic average value of a particle area of the silicon carbide particle is 50 µm² or more in an arbitrary region of the polished surface obtained by polishing the surface of the silicon carbide sintered body.

9. The silicon carbide sintered body according to Claim 1, wherein
an area-weighted average value of the particle area of the silicon carbide particle is 300 µm² or more in an arbitrary region of the polished surface obtained by polishing the surface of the silicon carbide sintered body.

10. The silicon carbide sintered body according to Claim 1, wherein
a maximum value of the particle area of the silicon carbide particle is 1000 µm² or more in an arbitrary region of the polished surface obtained by polishing the surface of the silicon carbide sintered body.

11. The silicon carbide sintered body according to any one of Claims 5 to 10, wherein
a nitrogen content in the silicon carbide sintered body is 300 wt. ppm or less.

12. A heat dissipation member using the silicon carbide sintered body according to Claim 1 or 4.
